# EUROPÄISCHE PATENTANMELDUNG

(11) **EP 2 159 941 A2**
(43) Veröffentlichungstag der Anmeldung: **03.03.2010**
(21) Anmeldenummer: 09162805.7
(22) Anmeldetag: 16.06.2009
(51) Int. Cl.: H04J 3/06, H04L 7/00

(54) **Verfahren zur Taktsynchronisierung in einem Kommunikationsnetz und entsprechendes Kommunikationsnetz**

(30) Priorität: 26.08.2008 DE 102008039793
(71) Anmelder: Siemens Aktiengesellschaft, 80333 München (DE)
(72) Erfinder: Riedl, Johannes, Dr., 84030 Ergolding (DE); Randel, Sebastian, 81547 München (DE); Breyer, Florian, 80939 München (DE)

(57) **Zusammenfassung**

Die Erfindung betrifft ein Verfahren zur Taktsynchronisierung in einem, insbesondere auf paketbasierter Datenübertragung basierenden, Kommunikationsnetz, wobei ein erstes Taktsignal (CLK1) von einem ersten Netzelement (NE1) als Referenzsignal zur Synchronisation eines jeweiligen zweiten Taktsignals (CLK2, CLK3, ...) von einem oder mehreren zweiten Netzelementen (NE2, NE3, ...) verwendet wird. Das erste Taktsignal (CLK1) wird auf einer ausschließlich für das Taktsignal (CLK1) bestimmten Übertragungsfrequenz oder einem ausschließlich für das erste Taktsignal bestimmten Übertragungsfrequenzband an das eine oder die mehreren zweiten Netzelemente (NE2, NE3, NE4) übertragen. Das erste Taktsignal (CLK1) wird in dem jeweiligen zweiten Netzelement (NE2, NE3, ...) zur Anpassung des zweiten Taktsignals (CLK2, CLK3, ...) verarbeitet, sodass das zweite Taktsignal (CLK2, CLK3, ...) dem ersten Taktsignal (CLK1) entspricht.

## Beschreibung

Die Erfindung betrifft ein Verfahren zur Taktsynchronisierung in einem, insbesondere auf paketbasierter Datenübertragung basierenden, Kommunikationsnetz, wobei ein erstes Taktsignal von einem ersten Netzelement als Referenzsignal zur Synchronisation eines jeweiligen zweiten Taktsignals von einem oder mehreren zweiten Netzelementen verwendet wird.

Die Erfindung betrifft weiter ein Kommunikationsnetz, das insbesondere auf einer paketbasierten Datenübertragung basiert, umfassend ein erstes Netzelement zur Abgabe eines ersten Taktsignals als Referenzsignal zur Synchronisation eines jeweiligen zweiten Taktsignals von einem oder mehreren zweiten Netzelementen des Kommunikationsnetzes.

In einem auf paketbasierter Datenübertragung basierenden Kommunikationsnetz, wie z.B. dem Ethernet, ist eine Synchronisation sog. Uhren in jeweiligen Netzelementen notwendig. Die Uhren, welche beispielsweise durch einen Zählwert repräsentiert sind, basieren auf einer in einem jeweiligen Netzelement bereitgestellten Oszillatorfrequenz. Ausgehend von einer sog. Master-Uhr in dem ersten Netzelement, dem sog. Master, sollen die Uhren aller anderen, zweiten Netzelemente des Kommunikationsnetzes auf die Uhr des Masters aufsynchronisiert werden. Dabei besteht häufig das Erfordernis, dass die Synchronisation in sehr kurzer Zeit mit sehr hoher Genauigkeit erfolgen muss.

Uhrzeitsynchronisationsmechanismen in paketbasierten Kommunikationsnetzen sind in den Standards IEEE 1588 und IEEE 802.1as beschrieben. In diesen werden durch den Master regelmäßig Synchronisations-Nachrichten mit einer aktuellen Uhrzeit des Masters an die anderen Netzelemente des Kommunikationsnetzes gesendet. Die anderen Netzelemente werden durch diese Synchronisations-Nachrichten regelmäßig über die aktuelle Uhrzeit des Masters informiert. Aufgrund dieser Information können die anderen Netzelemente ihre eigene, lokale Uhrzeit entsprechend korrigieren.

Die Übertragung der Synchronisations-Nachrichten dauert aufgrund von Verarbeitungs-Verzögerungen und Laufzeit-Verzögerungen eine gewisse Zeit, wobei diese Zeiten aus verschiedenen Gründen Jitter aufweisen. Eine Verarbeitungs-Verzögerung (Forwarding Delay) tritt beispielsweise beim Durchlaufen eines Switches als Netzelement auf. Eine Laufzeit-Verzögerung (Propagation Delay) tritt beispielsweise während der Übertragung der Nachricht entlang einer Verkablung oder des Ausbreitungsweges aus. Die in den Synchronisations-Nachrichten angegebene Master-Uhrzeit muss deshalb durch jedes Netzelement um die Verarbeitungs- und die Laufzeit-Verzögerung korrigiert werden.

Um diese Korrektur durchführen zu können, müssen den entsprechenden zweiten Netzelementen die Verzögerungen bekannt sein. Die Verarbeitungs-Verzögerung wird in der Regel für die eingesetzte Hardware des Netzelementes gemessen oder geschätzt. Die entsprechenden Werte werden durch eine Konfiguration den zweiten Netzelementen als Parameter übergeben bzw. übermittelt. Die Laufzeit-Verzögerung wird regelmäßig über den Austausch von spezifizierten Nachrichten, welche sog. Uhrzeit-Stempel enthalten, zwischen benachbarten Netzelementen bestimmt.

Den bekannten Uhrzeitsynchronisationsmechanismen liegt damit das Prinzip zu Grunde, die lokale Uhrzeit der zweiten Netzelemente aus den durch Nachrichtenaustausch bekannten Informationen zu korrigieren, um zur Uhrzeit des Masters zu gelangen. Implizit berücksichtigt der beschriebene Mechanismus die Korrektur von signifikanten Veränderungen der Oszillatorfrequenzen, aus denen die Uhrzeiten abgeleitet werden, in den jeweiligen Netzelementen. Die Veränderungen resultieren aus sich verändernden Umweltbedingungen (wie z.B. Temperaturschwankungen, Erschütterungen einzelner Netzelemente usw.). Allerdings kann mit diesem Verfahren die Synchronität der Uhren der Netzelemente erst nach einer gewissen Zeit, die typischerweise im Sekundenbereich liegt, wieder hergestellt werden. Auch können die Uhren während dieser relativ langen Synchronisationsphase stark voneinander abweichen. Gefordert ist jedoch häufig eine Synchronität der Uhren innerhalb viel kürzerer Zeitspannen, d.h. innerhalb von Bruchteilen einer Sekunde, sowie eine garantierte Maximalabweichung von 1 Mikrosekunde auch während der Synchronisationsphase.

Die bekannten Konzepte zur Zeitsynchronisation, wie in IEEE 1588 bzw. IEEE 802.1as und zuvor beschrieben, haben folgende Nachteile :
- Je mehr Netzelemente zwischen dem Master (erstes Netzelement) und einem zu synchronisierenden zweiten Netzelement liegen, umso stärkere Abweichungen können zwischen der Master-Uhrzeit und der lokalen Uhrzeit des zu synchronisierenden zweiten Netzwerkelements auftreten. Es findet somit eine Fehlerfortpflanzung oder - verstärkung statt.
- Bei einer schnellen bzw. sprunghaften Veränderung der Eigenschaften eines Oszillatorquarzes, z.B. aufgrund eines temporär starken Temperaturanstiegs oder einer Erschütterung, ist die Uhrzeit-Synchronisierung sehr träge, d.h. es kann einige Zeit dauern, bis die gewünschte Synchronität wieder hergestellt ist, was in vielen Fällen jedoch nicht akzeptabel ist.
- Aufgrund der hohen Ungenauigkeiten bei der Übertragung von Synchronisations-Nachrichten ist eine geforderte Synchronisations-Genauigkeit von einer Mikrosekunde nur in kleinen linearen Netzen mit weniger als 100 Netzelementen zu erreichen. Die hohe Ungenauigkeit bei der Nachrichtenübertragung resultiert aus dem paketorientierten Charakter des Kommunikationsnetzes und der nicht exakt vorhersagbaren Verweilzeiten der Pakete in den jeweiligen Netzelementen.

Es ist daher Aufgabe der vorliegenden Erfindung, ein Verfahren anzugeben, mit welchem eine möglichst schnelle und präzise Synchronisierung von Uhren von Netzelementen in, insbesondere auf paketbasierter Übertragung basierenden, Kommunikationsnetzen möglich ist. Es ist weiterhin Aufgabe der vorliegenden Erfindung, ein Kommunikationsnetz anzugeben, in dem eine möglichst präzise Synchronisierung von Uhren jeweiliger Netzelemente ermöglicht wird.

Diese Aufgaben werden durch ein Verfahren mit den Merkmalen des Patentanspruches 1 bzw. ein Kommunikationsnetz mit den Merkmalen des Patentanspruches 13 gelöst. Vorteilhafte Ausgestaltungen ergeben sich aus den abhängigen Patentansprüchen.

Die Erfindung schafft ein Verfahren zur Taktsynchronisierung in einem, insbesondere auf paketbasierter Datenübertragung basierenden, Kommunikationsnetz, wobei ein erstes Taktsignal von einem ersten Netzelement als Referenzsignal zur Synchronisation eines jeweiligen zweiten Taktsignals von einem oder mehreren zweiten Netzelementen verwendet wird. Bei dem Verfahren wird das erste Taktsignal auf einer ausschließlich für das erste Taktsignal bestimmten Übertragungsfrequenz oder einem ausschließlich für das erste Taktsignal bestimmten Übertragungsfrequenzband an das eine oder die mehreren zweiten Netzelemente übertragen. Das erste Taktsignal wird in dem jeweiligen zweiten Netzelement zur Anpassung des zweiten Taktsignals verarbeitet, so dass das zweite Taktsignal dem ersten Taktsignal entspricht.

Die Erfindung schafft ferner ein Kommunikationsnetz, bei dem insbesondere Nutzdaten paketbasiert übertragen werden, umfassend ein erstes Netzelement zur Abgabe eines ersten Taktsignals als Referenzsignal zur Synchronisation eines jeweiligen zweiten Taktsignals von einem oder mehreren zweiten Netzelementen des Kommunikationsnetzes, wobei das erste Taktsignal auf einer ausschließlich für das erste Taktsignal bestimmten Übertragungsfrequenz oder einem ausschließlich für das erste Taktsignal bestimmten Übertragungsfrequenzband an das eine oder die mehreren zweiten Netzelemente übertragbar ist, und wobei das erste Taktsignal in dem zweiten Netzelement zur Anpassung des zweiten Taktsignals verarbeitbar ist, so dass das zweite Taktsignal dem ersten Taktsignal entspricht.

Die Erfindung basiert auf dem Gedanken, für die Synchronisierung des Taktes in jeweiligen Netzelementen eine Frequenz oder ein dünnes Frequenzband auf der physikalischen Übertragungsschicht für den Abgleich jeweiliger Oszillatorfrequenzen bzw. Taktsignale zu reservieren. Da im Rahmen der Erfindung die Taktsynchronisation ausschließlich über die physikalische Schicht erfolgt, wird eine viel höhere Genauigkeit erzielt, als dies mit den aus dem Stand der Technik bekannten Synchronisationsmechanismen der Fall ist. Darüber hinaus kann durch eine Entkopplung der Synchronisation von der Datenübertragung insbesondere in auf paketbasierter Datenübertragung basierenden Kommunikationsnetzen vermieden werden, dass beim Vergleich der Takte bzw. der Uhren der beiden betrachteten Netzknoten Schwingungen zu beobachten sind, die erst nach längerer Zeit abklingen. Eine möglichst präzise und unmittelbare Synchronisation der Takte und Uhrzeiten ist sowohl für bestimmte Anwendungen notwendig, wie z.B. mobile Handover in drahtlosen Kommunikationsnetzen, als auch zur Realisierung vorgegebener Funktionen oder Eigenschaften des zugehörigen paketbasierten Datennetzes, wie z.B. die Festlegung von Scheduling-Zyklen zur Realisierung isochroner Echtzeitdienste.

Gemäß einer Ausgestaltung beruht eine Datenübertragung zwischen dem ersten und einem der zweiten Netzknoten in dem Kommunikationsnetz auf einem Frequenzmultiplexverfahren (FDM), wobei die für die Taktsynchronisierung verwendete Übertragungsfrequenz sich insbesondere nicht mit einer für die Datenübertragung benutzten weiteren Übertragungsfrequenz überschneidet.

Das erste Taktsignal wird auf dem physikalischen Trägermedium als analoges Signal an das eine oder die mehreren zweiten Netzelemente übertragen. Um die für die Synchronisierung relevanten Daten beim Empfänger, einem der zweiten Netzelemente, zugänglich zu machen, muss lediglich eine Filterung bzw. Trennung der für die Synchronisierung verwendeten Frequenz oder des Frequenzbandes von der für die Datenübertragung verwendeten Frequenz oder Frequenzband vorgenommen werden.

Das erste und das zweite Taktsignal werden von einem Oszillator in dem jeweiligen ersten und zweiten Netzelement abgeleitet. Insbesondere wird in dem zweiten Netzelement eine Phasendifferenz als Regelgröße zwischen den Frequenzen des ersten und des zweiten Taktsignals ermittelt und die Phasendifferenz wird zur Angleichung der Frequenz des zweiten Taktsignals an die Frequenz des ersten Taktsignals verwendet. Dies bedeutet, dass die Taktsignale der Oszillatoren der zweiten Netzelemente steuerbar sind. Insbesondere handelt es sich bei den Oszillatoren der zweiten Netzelemente um aktiv veränderbare Oszillatoren, wie z.B. Voltage Controlled Oscillators (VCO) oder Voltage Controlled Crystal Oscillators (VCXO).

Das von dem ersten Netzelement an das zweite Netzelement übertragene Referenzsignal wird damit in dem zweiten Netzelement verwendet, um den dort für die lokale Uhrzeit verantwortlichen Oszillator so zu korrigieren, dass die Oszillatoren der beiden benachbarten Netzknoten die gleiche Frequenz ergeben und damit synchronisiert sind. Damit kann das synchronisierte zweite Taktsignal als Referenzsignal an ein weiteres benachbartes zweites Netzelement zu dessen Synchronisation übertragen werden.

Das erste Taktsignal wird gemäß einer Variante drahtgebunden über eine elektrische oder eine optische Leitung an das eine oder die mehreren zweiten Netzelemente übertragen. In einer anderen Variante wird das erste Taktsignal drahtlos über einen dedizierten Übertragungskanal von dem ersten zu dem zweiten Netzelement übertragen. Die Synchronisation von Uhren von Netzelementen in einem Kommunikationsnetz kann somit bei beliebigen physikalischen Übertragungsmedien erfolgen.

Gemäß einer weiteren Ausgestaltung des erfindungsgemäßen Verfahrens weist das Kommunikationsnetz ein erstes Netzelement und eine Mehrzahl an zweiten Netzelementen auf, welche zumindest teilweise in jeweiliger Kommunikationsverbindung zueinander stehen, wobei zur Taktsynchronisierung, ausgehend von dem ersten Netzelement, eine logische Baumstruktur erzeugt wird, und an allen physikalisch vorhandenen Kommunikationsverbindungen, welche nicht in der logischen Baumstruktur enthalten sind, das erste Taktsignal oder ein zweites synchronisiertes Taktsignal ausgefiltert oder blockiert oder ignoriert wird. Die Taktsynchronisierung, wie diese bislang vorgeschlagen wurde, kann somit nicht nur in linearen oder baumartigen Kommunikationsnetzen verwendet werden. Vielmehr ist auch eine Verwendung in vermaschten Netzen möglich. Hierzu wird z.B. über das RSTP (Rapid Spanning Tree Protocol)-Protokoll auf dem physikalisch vermaschten Kommunikationsnetz eine logische Baumstruktur definiert, wobei an allen Verbindungen, die zwar in der physikalischen Topologie vorhanden sind, jedoch nicht in der logischen Baumstruktur erscheinen, eine Blockierung bzw. Behandlung des Synchronisations-Frequenzsignals/Frequenzbands stattfindet.

In einer weiteren Ausgestaltung wird zusätzlich zur zuvor beschriebenen Taktsynchronisation ein erster Zählwert entsprechend der aktuellen Uhrzeit des ersten Netzelements als Referenzwert zur Synchronisation eines jeweiligen zweiten Zählwerts des einen oder der mehreren zweiten Netzelemente verwendet, wobei durch das erste Netzelement zumindest eine Zählwertsynchronisationsnachricht an den oder die mehreren zweiten Netzelemente ausgesendet wird, wobei der eine oder die mehreren zweiten Netzelemente den in der Zählwertsynchronisationsnachricht enthaltenen ersten Zählwert des ersten Netzelements zur Korrektur ihres jeweiligen zweiten Zählwerts verarbeiten. Gemäß dieser Ausgestaltung ist die erfindungsgemäße Taktsynchronisation mit einem Offsetsynchronisationsmechanismus kombiniert, so dass sich eine genaue Uhrzeitsynchronisation in den Netzelementen des Kommunikationsnetzes bereitstellen lässt.

Zweckmäßigerweise wird der erste Zählwert in einem jeweiligen zweiten Netzelement um eine Verarbeitungs-Verzögerung und/oder um eine Laufzeit-Verzögerung korrigiert. Zur Ermittlung der Verarbeitungs-Verzögerung und/oder der Laufzeit-Verzögerung werden Nachrichten zwischen dem ersten und dem oder den zweiten Netzelementen ausgetauscht. Es ist zweckmäßig, wenn die Synchronisation eines jeweiligen zweiten Zählwerts, insbesondere die Verarbeitung der Zählwertsynchronisationsnachricht und/oder die Ermittlung der Verarbeitungs-Verzögerung und/oder die Laufzeit-Verzögerung, gemäß dem Standard IEEE 1588 oder IEEE 802.1as erfolgt.

Die Erfindung lässt sich damit mit bekannten Offsetsynchronisationsmechanismen, wie diese einleitend bereits beschrieben wurden, kombinieren. Aus dieser Kombination ergeben sich folgende Vorteile bzw. Verbesserungen:
- Die Fehlerfortpflanzung der Kombination der vorgeschlagenen Taktsynchronisation mit der beschriebenen Offsetsynchronisation ist um Größenordnungen kleiner als die Uhrzeitsynchronisation, wie diese eingangs bei der Beschreibung des Stands der Technik erläutert wurde.
- Die Einflüsse der Änderungen der Umweltbedingungen werden verschwindend gering, da auf eine Änderung einer Umweltbedingung eine sofortige Reaktion und Korrektur der entsprechenden Frequenzen erfolgt und damit eine Asynchronität der Uhrzeiten nach einmaliger Synchronisation weitgehend vermieden wird.
- Aufgrund des deutlich verbesserten Verhaltens hinsichtlich Fehlerfortpflanzung und Umgebungseinflüsse, ermöglicht die beschriebene Taktsynchronisation eine hohe Genauigkeit der Uhrzeitsynchronisation auch in sehr großen Kommunikationsnetzen.

Das erfindungsgemäße Vorgehen beruht darauf, für ein Taktsignal eine eigene Frequenz auf demselben physikalischen Medium, das auch für die Datenkommunikation benutzt wird, vorzusehen über die die Taktsynchronisation dann analog und insbesondere ohne Analog-Digital-Wandlung erfolgt. Hierbei ist sichergestellt, dass die Datenkommunikation nicht durch die Nutzung der eigenen Frequenz oder des Frequenzbandes für das Taktsignal beeinträchtigt wird. Hierdurch ergeben sich die folgenden Vorteile gegenüber bekannten Verfahren:
- Da bei dem erfindungsgemäßen Verfahren die Taktsynchronisation ausschließlich über das physikalische Trägermedium (die physikalische Schicht) erfolgt, wird eine größere Genauigkeit als im Stand der Technik erzielt.
- Bei einer Veränderung einer Frequenz eines der Oszillatoren eines Knotens gegenüber dem Oszillator des Masterknotens findet eine sofortige Anpassung der Frequenz des ersteren Knotens statt.
- Da die Uhrzeitsynchronisation nicht nur für Applikationen, sondern auch für das zugehörige paketbasierte Kommunikationsnetz zur Realisierung bestimmter Funktionen oder Eigenschaften benötigt wird, vermeidet eine Entkopplung der Synchronisation von der paketorientierten Übertragung, dass sich der Zustand des Datennetzes und insbesondere dessen Auslastungszustand negativ auf die Taktsynchronisation auswirkt.

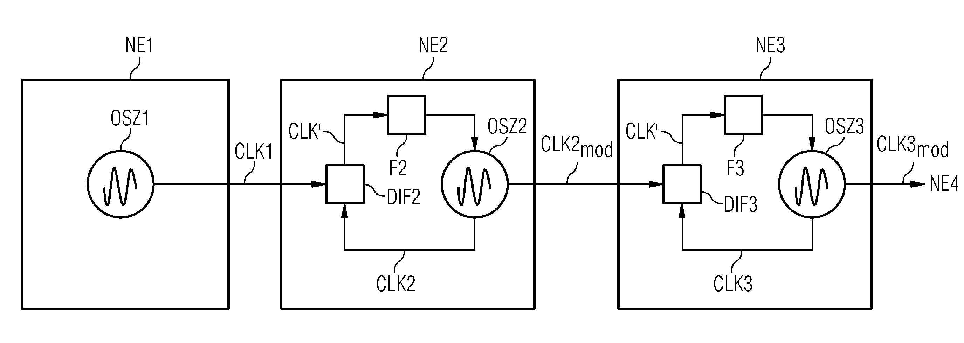

Die Erfindung wird nachfolgend näher anhand eines Ausführungsbeispiels in der Zeichnung erläutert.

Die einzige Figur zeigt in einer schematischen Darstellung ein lineares Kommunikationsnetz mit beispielhaft drei Netzelementen NE1, NE2, NE3. In dem dargestellten Kommunikationsnetz besteht eine Kommunikationsverbindung zwischen dem Netzelement NE1 und dem Netzelement NE2 sowie zwischen dem Netzelement NE2 und dem Netzelement NE3 usw. Die Kommunikation zwischen zwei benachbarten Netzelementen kann drahtgebunden oder drahtlos erfolgen. Für die Datenübertragung wird eine paketbasierte Datenübertragung angenommen, wobei diese auf einer dedizierten Frequenz oder einem dedizierten Frequenzband über das physikalische Übertragungsmedium erfolgt. Das Kommunikationsnetz kann beispielsweise als Ethernet ausgebildet sein.

In bekannter Weise verfügt jedes der Netzelemente NE1, NE2, NE3 über einen Oszillator OSZ1, OSZ2, OSZ3, welche jeweils eine Schwingung mit vorgegebener Frequenz abgeben. Aus diesem sinusförmigen Taktsignal kann eine Uhrzeit (z.B. ein Zählwert) abgeleitet werden, welche für den Betrieb eines jeweiligen Netzknotens benötigt wird. Das Taktsignal CLK1 des Oszillators OSZ1 des Netzelements NE1 wird als Referenzsignal zur Synchronisierung der Taktsignale der Netzelemente NE2, NE3, usw. verwendet. Das Netzelement NE1 stellt aus diesem Grund einen sog. Master dar. Erfindungsgemäß wird das Taktsignal CLK1 des Netzelements NE1, d.h. die von dem Oszillator OSZ1 erzeugte Schwingung, auf einer ausschließlich für das Taktsignal CLK1 bestimmten Übertragungsfrequenz oder einem ausschließlich für das Taktsignal CLK1 bestimmten Übertragungsfrequenzband an das benachbarte Netzelement NE2 übertragen. Zweckmäßigerweise liegt hierbei keine Überschneidung zwischen der Frequenz bzw. dem Frequenzband des Taktsignals CLK1 und der für die Datenübertragung zwischen dem Netzelement NE1 und dem Netzelement NE2 verwendeten Frequenz bzw. Frequenzband vor. Die Übertragung des Taktsignals und der Daten erfolgt hierbei über das gleiche physikalische Übertragungsmedium.

Das Taktsignal CLK1 wird einem ersten Eingang eines Phasen-Differenz-Detektors DIF2 des Netzelements NE2 zugeführt. Einem zweiten Eingang des Phasen-Differenz-Detektors DIF2 wird ein von dem Oszillator OSZ2 des Netzelements NE2 gewonnenes Taktsignal CLK2 zugeführt. Der Phasen-Differenz-Detektor DIF2 bildet die Differenz zwischen den Taktsignalen CLK1, CLK2, welche am Ausgang des Phasen-Differenz-Detektors ausgegeben wird. Das Differenzsignal ist mit CLK' gekennzeichnet. Dieses Signal kann entweder direkt einem Steuereingang des steuerbaren Oszillators OSZ2 oder - wie in dem Ausführungsbeispiel dargestellt - über einen Tiefpassfilter F2 dem Steuereingang des Oszillators OSZ2 zugeführt werden. Bei dem Oszillator OSZ2 handelt es sich um einen Oszillator, dessen Frequenz aktiv veränderbar ist. Der Oszillator OSZ2 kann beispielsweise als Voltage Controlled Oscillator (VCO) oder Voltage Controlled Crystal Oscillator (VCXO) ausgebildet sein.

Das aus den Taktsignalen CLK1, CLK2 gebildete Differenzsignal CLK' dient dazu, die Phasendifferenz zwischen den Taktsignalen CLK1, CLK2 zu Null zu machen, so dass das synchronisierte Taktsignal CLK2 dem Taktsignal CLK1 entspricht. Damit sind die Oszillatoren OSZ1 des Netzelements NE1 und des Netzelements NE2 zueinander synchronisiert. Die Synchronisation des Oszillators OSZ3 des weiteren Netzelements NE3 erfolgt über das synchronisierte Taktsignal des Oszillators OSZ2, welches in der Figur mit CLK2_{mod} gekennzeichnet ist. Mit anderen Worten stellt das synchronisierte Taktsignal CLK2_{mod} das Referenzsignal für den Phasen-Differenz-Detektor DIF3 des Netzelements NE3 dar. Die Ausgestaltung des weiteren Netzelements NE3 entspricht hierbei der Ausgestaltung des Netzelements NE2.

Das Taktsignal nutzt erfindungsgemäß eine eigene Frequenz oder ein eigenes Frequenzband auf demselben physikalischen Übertragungsmedium, das auch die paketbasierte Datenkommunikation nutzt, letztere jedoch in keiner Weise stört. Insbesondere wird eine Frequenz oder ein Frequenzband verwendet, das sich nicht mit der für die Datenübertragung genutzten Frequenz/Frequenzband überschneidet. Wird die Erfindung bei bereits existierenden Übertragungstechnologien verwendet, ist dieses Frequenzband derart zu bestimmen, dass es sich nicht mit den für die Datenübertragung benutzten Frequenzen überschneidet. Bei neu entwickelten Übertragungstechnologien kann eine Überschneidungsfreiheit zwischen der Frequenz oder dem Frequenzband für die Synchronisierung und den Frequenzen für die Datenübertragung gewährleistet werden, wobei keine weiteren Einschränkungen bestehen. Hierdurch lässt sich im Vergleich zu herkömmlichen Verfahren eine höhere Genauigkeit bei der Synchronisation der Uhren benachbarter Netzelemente erzielen. Ebenso findet bei einer Veränderung einer Quarzfrequenz eine quasi sofortige Anpassung der Frequenz des benachbarten Netzelements statt.

Die vorgeschlagene Taktsynchronisation kann mit anderen Offsetsynchronisationsmechanismen kombiniert werden, wie beispielsweise denjenigen aus den Standards IEEE 1588 und IEEE 802.1as. Durch diese Kombination ergibt sich eine hochpräzise Uhrzeitsynchronisation, die die eingangs genannten Schwachstellen vermeidet bzw. verbessert. Insbesondere lässt sich die Fehlerfortpflanzung der Takt- und Uhrzeitsynchronisation gegenüber dem herkömmlichen Offsetsynchronisationsmechanismus um Größenordnungen verkleinern. Die Einflüsse der Änderungen der Umweltbedingungen werden verschwindend gering, da auf jede äußere Einwirkung eine sofortige Reaktion und Korrektur der entsprechenden Frequenzen erfolgt. Darüber hinaus lässt sich eine hohe Genauigkeit der Uhrzeitsynchronisation auch in sehr großen Kommunikationsnetzen mit weit mehr als 100 Netzelementen erreichen.

Im Ausführungsbeispiel ist ein lineares Kommunikationsnetz dargestellt. Die Erfindung lässt sich nicht nur in linearen oder baumartigen Kommunikationsnetzen, sondern auch in vermaschten Kommunikationsnetzen verwenden. Hierzu muss ein quasi-lineares oder baumartiges Kommunikationsnetz hergestellt werden, wobei dies über die Definition einer logischen Baumstruktur auf dem physikalisch vermaschten Netzwerk erfolgt. An allen Verbindungen, die zwar in der physikalischen Topologie vorhanden sind, jedoch nicht in der logischen Baumstruktur erscheinen, findet dann eine Blockierung oder eine Ignorierung oder ein Ausfiltern des Synchronisations-Frequenzsignals statt. Als Protokoll zur Definition einer logischen Baumstruktur kann beispielsweise RSTP (Rapid Spanning Tree Protocol) verwendet werden.

## Patentansprüche

1. Verfahren zur Taktsynchronisierung in einem, insbesondere auf paketbasierter Datenübertragung basierenden, Kommunikationsnetz, wobei ein erstes Taktsignal (CLK1) von einem ersten Netzelement (NE1) als Referenzsignal zur Synchronisation eines jeweiligen zweiten Taktsignals (CLK2, CLK3, ...) von einem oder mehreren zweiten Netzelementen (NE2, NE3, ...) verwendet wird, bei dem:
- das erste Taktsignal (CLK1) auf einer ausschließlich für das Taktsignal (CLK1) bestimmten Übertragungsfrequenz oder einem ausschließlich für das Taktsignal bestimmten Übertragungsfrequenzband an das eine oder die mehreren zweiten Netzelemente (NE2, NE3, ...) übertragen wird, und
- das erste Taktsignal (CLK1) in dem jeweiligen zweiten Netzelement (NE2, NE3, ...) zur Anpassung des zweiten Taktsignals (CLK2, CLK3, ...) verarbeitet wird, sodass das zweite Taktsignal (CLK2, CLK3, ...) dem ersten Taktsignal (CLK1) entspricht.

2. Verfahren nach Anspruch 1, bei dem eine Datenübertragung zwischen dem erstem (NE1) und einem der zweiten Netzknoten (NE2, NE3, ...) in dem Kommunikationsnetz auf einem Frequenzmultiplexverfahren (FDM) beruht, wobei die für die Taktsynchronisierung verwendete Übertragungsfrequenz sich insbesondere nicht mit einer für die Datenübertragung benutzten weiteren Übertragungsfrequenz überschneidet.

3. Verfahren nach Anspruch 1 oder 2, bei dem das erste Taktsignal (CLK1) auf dem physikalischen Trägermedium als analoges Signal an das eine oder die mehreren zweiten Netzelemente (NE2, NE3, ...) übertragen wird.

4. Verfahren nach einem der vorherigen Ansprüche, bei dem das erste und das zweite Taktsignal (CLK1, CLK2, ...) von einem Oszillator (OSZ1, OSZ2, ...) in dem jeweiligen ersten und zweiten Netzelement (NE1, NE2, ...) abgeleitet werden.

5. Verfahren nach einem der vorherigen Ansprüche, bei dem in dem zweiten Netzelement (NE2, NE3, ...) eine Phasendifferenz als Regelgröße zwischen den Frequenzen des ersten und des zweiten Taktsignals (CLK1, CLK2, ...) ermittelt wird und die Phasendifferenz zur Angleichung der Frequenz des zweiten Taktsignals (CLK2, ...) an die Frequenz des ersten Taktsignals (CLK1) verwendet wird.

6. Verfahren nach einem der Ansprüche 1 bis 5, bei dem das erste Taktsignal (CLK1) drahtgebunden über eine elektrische oder eine optische Leitung an das eine oder die mehreren zweiten Netzelemente übertragen wird.

7. Verfahren nach einem der Ansprüche 1 bis 5, bei dem das erste Taktsignal (CLK1) drahtlos über einen dedizierten Übertragungskanal von dem ersten zu dem zweiten Netzelement (NE1, NE2, NE3, ...) übertragen wird.

8. Verfahren nach einem der vorherigen Ansprüche, bei dem das Kommunikationsnetz ein erstes Netzelement (NE1) und eine Mehrzahl an zweiten Netzelementen (NE2, NE3, ...) aufweist, welche zumindest teilweise in jeweiliger Kommunikationsverbindung zueinander stehen, wobei zur Taktsynchronisierung
- ausgehend von dem ersten Netzelement (NE1), eine logische Baumstruktur erzeugt wird, und
- an allen physikalisch vorhandenen Kommunikationsverbindungen, welche nicht in der logischen Baumstruktur enthalten sind, das erste Taktsignal (CLK1) oder ein zweites synchronisiertes Taktsignal (CLK2_{mod}, CLK3_{mod}, ...) ausgefiltert oder blockiert oder ignoriert wird.

9. Verfahren nach einem der vorherigen Ansprüche, bei dem ein erster Zählwert des ersten Netzelements als Referenzwert zur Synchronisation eines jeweiligen zweiten Zählwerts des einen oder der mehreren zweiten Netzelemente verwendet wird, wobei durch das erste Netzelement (NE1) zumindest eine Zählwertsynchronisationsnachricht an den oder die mehreren zweiten Netzelemente (NE2, NE3, ...) ausgesendet wird, wobei der eine oder die mehreren zweiten Netzelemente (NE2, NE3, ...) den in der Zählwertsynchronisationsnachricht enthaltenen ersten Zählwert des ersten Netzelements (NE1) zur Korrektur ihres jeweiligen zweiten Zählwerts verarbeiten.

10. Verfahren nach Anspruch 9, bei dem der erste Zählwert in einem jeweiligen zweiten Netzelement (NE2, NE3, ...) um eine Verarbeitungs-Verzögerung und/oder um eine Laufzeit-Verzögerung korrigiert wird.

11. Verfahren nach Anspruch 10, bei dem zur Ermittlung der Verarbeitungs-Verzögerung und/oder der Laufzeit-Verzögerung Nachrichten zwischen dem ersten und dem oder den zweiten Netzelementen ausgetauscht werden.

12. Verfahren nach Anspruch 9, 10 oder 11, bei dem die Synchronisation eines jeweiligen zweiten Zählwerts, insbesondere die Verarbeitung der Zählwertsynchronisationsnachricht und/oder die Ermittlung der Verarbeitungs-Verzögerung und/oder der Laufzeit-Verzögerung, gemäß dem Standard IEEE 1588 oder IEEE 802.1as erfolgt.

13. Kommunikationsnetz, bei dem insbesondere Nutzdaten paketbasiert übertragen werden, umfassend ein erstes Netzelement (NE1) zur Abgabe eines ersten Taktsignals (CLK1) als Referenzsignal zur Synchronisation eines jeweiligen zweiten Taktsignals (CLK2, CLK3, ...) von einem oder mehreren zweiten Netzelementen (NE2, NE3, ...) des Kommunikationsnetzes, wobei das erste Taktsignal (CLK1) auf einer ausschließlich für das erste Taktsignal (CLK1) bestimmten Übertragungsfrequenz oder einem ausschließlich für das erste Taktsignal (CLK1) bestimmten Übertragungsfrequenzband an das eine oder die mehreren zweiten Netzelemente (NE2, NE3, ...) übertragbar ist, und wobei das erste Taktsignal (CLK1) in dem zweiten Netzelement (NE2, NE3, ...) zur Anpassung des zweiten Taktsignals (CLK2, CLK3, ...) verarbeitbar ist, sodass das zweite Taktsignal (CLK2, CLK3, ...) dem ersten Taktsignal (CLK1) entspricht.
